# EUROPÄISCHE PATENTSCHRIFT

(11) **EP 1 067 666 B1**
(45) Veröffentlichungstag und Bekanntmachung des Hinweises auf die Patenterteilung: **26.01.2005**
(21) Anmeldenummer: 00114332.0
(22) Anmeldetag: 04.07.2000
(51) Int. Cl.: H02M 5/00, H02M 1/00, H02M 7/06, H02M 7/12

(54) **Schaltungsanordnung**
Circuit arrangement
Arrangement d'un circuit

(30) Priorität: 05.07.1999 DE 19930880
(43) Veröffentlichungstag der Anmeldung: 10.01.2001
(73) Patentinhaber: SIEMENS AKTIENGESELLSCHAFT, 80333 München (DE)
(72) Erfinder: Fuchs, Andreas, Dr., 91056 Erlangen (DE)

(56) Entgegenhaltungen:
- PATENT ABSTRACTS OF JAPAN vol. 1996, no. 02, 29. Februar 1996 (1996-02-29) -& JP 07 274529 A (HITACHI LTD), 20. Oktober 1995 (1995-10-20)
- PATENT ABSTRACTS OF JAPAN vol. 012, no. 465 (E-690), 7. Dezember 1988 (1988-12-07) & JP 63 186568 A (TOSHIBA CORP), 2. August 1988 (1988-08-02)
- PATENT ABSTRACTS OF JAPAN vol. 1996, no. 10, 31. Oktober 1996 (1996-10-31) -& JP 08 168101 A (HITACHI LTD), 25. Juni 1996 (1996-06-25)
- PATENT ABSTRACTS OF JAPAN vol. 1996, no. 12, 26. Dezember 1996 (1996-12-26) -& JP 08 214557 A (TOSHIBA CORP), 20. August 1996 (1996-08-20)
- PATENT ABSTRACTS OF JAPAN vol. 1999, no. 04, 30. April 1999 (1999-04-30) -& JP 11 018441 A (NISSIN ELECTRIC CO LTD), 22. Januar 1999 (1999-01-22)
- PATENT ABSTRACTS OF JAPAN vol. 017, no. 395 (M-1451), 23. Juli 1993 (1993-07-23) & JP 05 076103 A (TOSHIBA CORP), 26. März 1993 (1993-03-26)

## Beschreibung

Die Erfindung betrifft eine Schaltungsanordnung mit wenigstens einem Eingangsstromrichter, der mit wenigstens einer Sekundärwicklung eines Haupt-Transformators über Überbrückungsschalter verbunden ist und dem wenigstens ein Spannungszwischenkreis nachgeschaltet ist, wobei im Spannungszwischenkreis wenigstens ein Zwischenkreiskondensator angeordnet ist.

Derartige Schaltungsanordnungen sind durch den Aufsatz von Bernhard Kießling und Jörg Wach "Güterzuglokomotive Baureihe 152 der Deutschen Bahn" in "eb - Elektrische Bahnen" 94 (1996) 8/9, Seiten 248 bis 260, bekannt. Bei den bekannten Schaltungsanordnungen werden die Eingangsstromrichter und ihre nachgeschalteten Spannungszwischenkreise direkt oder indirekt über Drosseln bzw. Transformatoren an eine Netzspannung geschaltet. Aufgrund der Induktivitäten der vorgeschalteten Drosseln bzw. Transformatorwicklungen entstehen Überspannungen am Zwischenkreiskondensator. Um dies zu vereindern, wird bei dieser Schaltungsanordnung durch zuschaltbare Vorwiderstände der Ladestrom und damit die Überspannung begrenzt. Hierfür sind zumindest zwischen wenigstens einer der Sekundär-Teilwicklungen und den Eingangsstromrichtern zusätzliche Schaltelemente, wie z. B. Vorladeschütze und Überbrückungsschalter, sowie Vorladewiderstände angeordnet.

Die relativ hohe Anzahl an Schaltelementen, die hierfür benötigt werden, verursachen einen erhöhten Wartungsaufwand, wobei die Spannungen, welchen die Schaltelemente ausgesetzt sind, relativ kurze Wartungsintervalle erforderlich machen.

Aus Patent Abstracts of Japan zu JP 07274529 A ist eine Schaltungsanordnung bekannt, bei der einem Transformator eine Primärwicklung und sekundärseitig neben der Sekundärwicklung auch eine Terziärwicklung zugeordnet ist.

An die Sekundärwicklung ist ein Eingangsstromrichter schaltbar, dem ein Zwischenkreiskondensator nachgeschaltet ist. An die Terziärwicklung, ist ein Hilfsnetz schaltbar, welches dazu dient, den Zwischenkreiskondensator vorzuladen. Während dieses Vorladevorganges ist die Primärwicklung an ein Versorgungsnetz angeschlossen und wird von diesem gespeist. Der Eingangsstromrichter wird dabei von der Sekundärwicklung nicht gespeist. Das Hilfsnetz weist gegenüber dem Versorgungsnetz geringere Kurzschlußleistung auf.

Aufgabe der vorliegenden Erfindung ist es, eine Schaltungsanordnung der eingangs genannten Art zu schaffen, die einfacher aufgebaut ist und einen geringeren Wartungsaufwand erfordert.

Die Aufgabe wird erfindungsgemäß durch eine Schaltungsanordnung gemäß Anspruch 1 gelöst. Vorteilhafte Ausgestaltungen der Erfindung sind in den weiteren Ansprüchen beschrieben.

Die Schaltungsanordnung nach Anspruch 1 umfaßt wenigstens einen Eingangsstromrichter, der an wenigstens eine Sekundärwicklung eines Haupt-Transformators schaltbar ist und dem wenigstens ein Spannungszwischenkreis nachgeschaltet ist, wobei im Spannungszwischenkreis wenigstens ein Zwischenkreiskondensator angeordnet ist. Erfindungsgemäß ist vor dem Zuschalten wenigstens einer Primärwicklung des Haupt-Transformators an ein Versorgungsnetz der Zwischenkreiskondensator durch ein Hilfsnetz aufladbar, das eine gegenüber dem zuschaltbaren Versorgungsnetz geringere Kurzschlußleistung aufweist, wobei das Hilfsnetz über wenigstens eine Hilfswicklung mit wenigstens einer Sekundärwicklung induktiv gekoppelt ist.

Aufgrund der geringeren Kurzschlußleistung des Hilfsnetzes kann bei bei der erfindungsgemäßen Schaltungsanordung für alle Sekundärwicklungen der Vorladewiderstand entfallen. Die Schaltungsanordnung gemäß Anspruch 1 benötigt also weniger Bauteile und ist damit gegenüber den bekannten Schaltungsanordnungen einfacher aufgebaut.

Bei der erfindungsgemäßen Schaltungsanordnung ist der Zwischenkreiskondensator nicht aus dem zuzuschaltenden Versorgungsnetz, sondern über ein Hilfsnetz aufladbar. Damit wird auf der Sekundärseite des Haupt-Transformators kein hochspannungsfestes Vorladeschütz benötigt. Das bei der Schaltungsanordnung nach Anspruch 1 auf der Sekundärseite des Haupt-Transformators angeordnete Schaltgerät muß im allgemeinen nur für Niederspannungen ausgelegt sein. Aufgrund des einfacheren Aufbaus erfordert die Schaltungsanordnung gemäß Anspruch 1 einen geringeren Wartungsaufwand und weist darüber hinaus eine erhöhte Zuverlässigkeit auf.

Besonders vorteilhaft sind Schaltungsanordnungen gemäß den Ansprüchen 3 und 4, da in diesen Fällen das Zuschalten des Hilfsnetzes stromlos erfolgen kann.

Weitere Vorteile und Einzelheiten ergeben sich aus der nachfolgenden Beschreibung von Ausführungsbeispielen. Es zeigen:
- FIG 1: eine Prinzipdarstellung einer Ausführungsform der erfindungsgemäßen Schaltungsanordnung,
- FIG 2: eine erste Ausführungsform eines Hilfsnetzes,
- FIG 3: eine zweite Ausführungsform eines Hilfsnetzes,
- FIG 4: eine dritte Ausführungsform eines Hilfsnetzes.

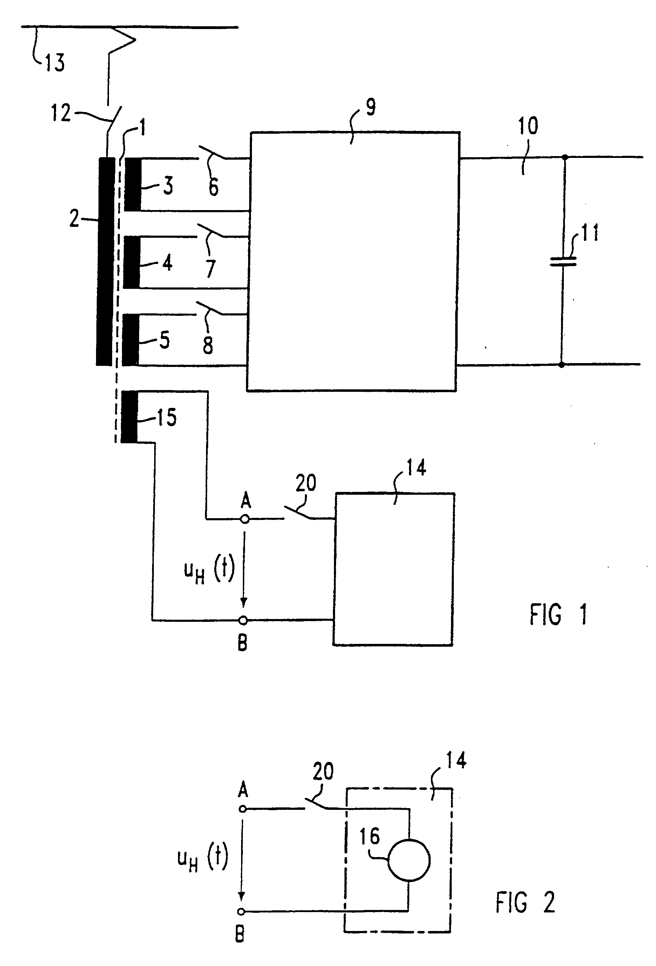

In FIG 1 ist mit 1 ein Haupt-Transformator bezeichnet, der eine Primärwicklung 2 und die Sekundärwicklungen 3, 4 und 5 aufweist.

An die Sekundärwicklungen 3 bis 5 ist durch Schließen von Überbrückungsschaltern 6, 7 und 8 ein Eingangsstromrichter 9 der erfindungsgemäßen Schaltungsanordnung an die Sekundärwicklungen 3 bis 5 schaltbar.

Bei dem in FIG 1 dargestellten Ausführungsbeispiel der erfindungsgemäßen Schaltungsanordnung ist dem Eingangsstromrichter 9 ein Spannungszwischenkreis 10 nachgeschaltet. Im Spannungszwischenkreis 10 ist ein Zwischenkreiskondensator 11 angeordnet.

Die Primärwicklung 2 des Haupt-Transformators 1 kann durch Schließen eines Leistungsschalters 12 an ein Versorgungsnetz 13 geschaltet werden.

Erfindungsgemäß ist vor dem Zuschalten der Primärwicklung 2 des Haupt-Transformators 1 an das Versorgungsnetz 13 der Zwischenkreiskondensator 11 durch ein Hilfsnetz 14 aufladbar. Das Hilfsnetz 14 weist eine gegenüber dem zuschaltbaren Versorgungsnetz 13 geringere Kurzschlußleistung auf und ist im gezeigten Ausführungsbeispiel über seine Anschlußklemmen A und B durch Schließen eines Schaltgerätes 20 (Schütz) an eine Hilfswicklung 15 schaltbar. Zwischen den Anschlußklemmen A und B des Hilfsnetzes 14 liegt dann eine Hilfsspannung u_{H}(t) an. Die Hilfswicklung 15 ist mit der Sekundärwicklung 5 des Haupt-Transformators 1 induktiv gekoppelt.

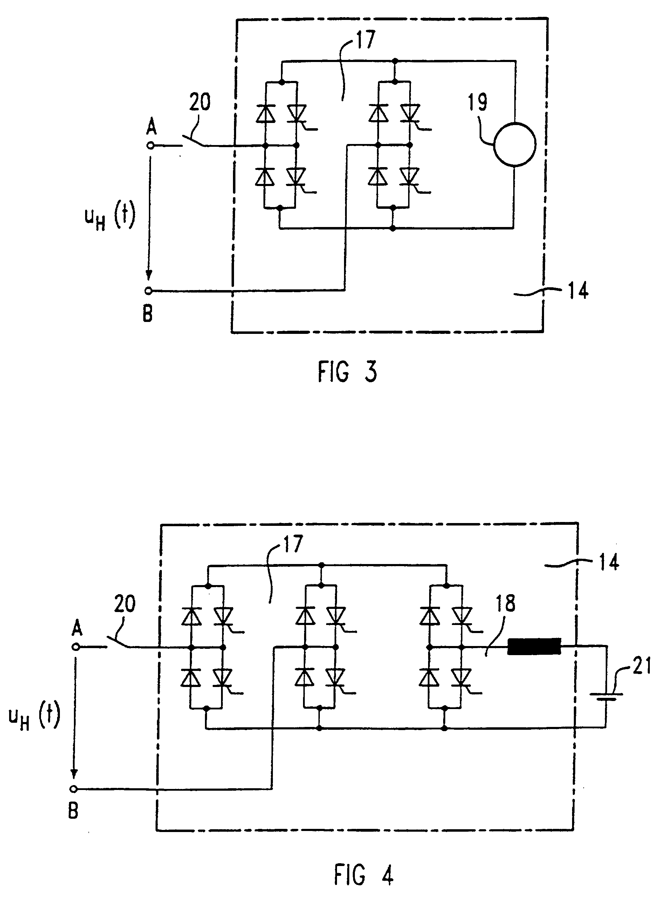

Das Hilfsnetz 14 (in den FIG 2 bis 4 strichpunktiert gekennzeichnet) kann beispielsweise von einem weiteren Netz 16 (FIG 2) oder durch wenigstens einen Wechselrichter, vorzugsweise einen Vierquadrantensteller 17 (FIG 3), und/oder wenigstens einen Hochsetzsteller 18 (FIG 4) gebildet werden.

Der in FIG 3 dargestellte Vierquadrantensteller 17 umfaßt nicht näher bezeichnete GTO-Thyristoren, die in an sich bekannter Weise in Reihe geschaltet sind und zu denen Dioden antiparallel angeordnet sind. Der Vierquadrantensteller 17 kann im Rahmen der Erfindung von einer beliebigen Spannungsquelle 19 (Batterie, Dieselgenerator usw.) gespeist werden.

Bei dem in FIG 4 dargestellten Ausführungsbeispiel wird das Hilfsnetz 14 von dem in FIG 3 gezeigten Vierquadrantensteller 17 und vom Hochsetzsteller 18 gebildet sowie von einer Batterie 21 gespeist.

Durch die Verwendung der in den FIG 2 bis 4 dargestellten Hilfsnetze, die gegenüber dem zuschaltbaren Versorgungsnetz 13 eine geringere Kurzschlußleistung aufweisen, kann bei der erfindungsgemäßen Schaltungsanordnung, für die in FIG 1 ein Ausführungsbeispiel gezeigt ist, bei allen Sekundärwicklungen 3 bis 5 der Vorladewiderstand entfallen. Die erfindungsgemäße Schaltungsanordnung benötigt also weniger Bauteile und ist damit gegenüber den bekannten Schaltungsanordnungen einfacher aufgebaut. Weiterhin wird auf der Sekundärseite des Haupt-Transformators 1 kein hochspannungsfestes Vorladeschütz benötigt. Das auf der Sekundärseite des Haupt-Transformators 1 angeordnete Schaltgerät 20 muß im allgemeinen nur für Niederspannungen ausgelegt sein.

## Patentansprüche

1. Schaltungsanordnung mit einem Hilfsnefz (14), das eine gegenüber einemVersorgungsnetz (13) geringere kurzschlussleistung aufweist, und mit wenigstens einem Eingangsstromrichter (9), der mit wenigstens einer Sekundärwicklung (3 bis 5) eines Haupt-Transformators (1) über Überbrückungsschalter (6 bis 8) verbunden ist und dem wenigstens ein Spannungszwischenkreis (10) nachgeschaltet ist, wobei im Spannungszwischenkreis (10) wenigstens ein Zwischenkreiskondensator (11) angeordnet ist,
**dadurch gekennzeichnet,**
**dass** zum Aufladen des Zwischenkreiskondensators (11) vor dem Zuschalten wenigstens einer Primärwicklung (2) des HauptTransformators (1) an das Versorgungsnetz (13) das Hilfsnetz (14) über wenigstens eine Hilfswicklung (15) mit der wenigstens einen Sekundärwicklung (3 bis 5) induktiv gekoppelt ist.

2. Schaltungsanordnung nach Anspruch 1,
**dadurch gekennzeichnet,**
**dass** das Hilfsnetz (14) von einem weiteren Netz (16) gebildet ist.

3. Schaltungsanordnung nach Anspruch 1,
**dadurch gekennzeichnet,**
**dass** das Hilfsnetz (14) durch wenigstens einen Wechselrichter, vorzugsweise einen Vierquadrantensteller (17), und/oder wenigstens einen Hochsetzsteller (18) gebildet ist.

4. Schaltungsanordnung nach Anspruch 3,
**dadurch gekennzeichnet,**
**dass** der wenigstens eine Wechselrichter bzw. der wenigstens eine Hochsetzsteller (18) aus wenigstens einer Batterie (21) versorgt ist.

5. Schaltungsanordnung nach Anspruch 1,
**dadurch gekennzeichnet,**
**dass** der Haupt-Transformator (1) eine Hilfsbetriebewicklung aufweist, die als Hilfswicklung (15) dient.

6. Schaltungsanordnung nach Anspruch 3 oder 5,
**dadurch gekennzeichnet,**
**dass** der wenigstens eine Wechselrichter bzw. der wenigstens eine Hochsetzsteller (18) aus Bauelementen einer Hilfsbetriebe-Schaltung gebildet ist.

## Claims

1. Circuit arrangement having an auxiliary power supply system (14), which has a lower short-circuit power than a power supply system (13), and having at least one input converter (9), which is connected to at least one secondary winding (3 to 5) of a main transformer (1) via bridging switches (6 to 8) and is connected downstream of the at least one voltage intermediate circuit (10), at least one intermediate circuit capacitor (11) being arranged in the voltage intermediate circuit (10), **characterized in that** the auxiliary power supply system (14) is inductively coupled, via at least one auxiliary winding (15), to the at least one secondary winding (3 to 5) for the purpose of charging the intermediate circuit capacitor (11) before at least one primary winding (2) of the main transformer (1) is connected to the power supply system (13).

2. Circuit arrangement according to Claim 1, **characterized in that** the auxiliary power supply system (14) is formed by a further power supply system (16).

3. Circuit arrangement according to Claim 1, **characterized in that** the auxiliary power supply system (14) is formed by at least one inverter, preferably a four-quadrant converter (17), and/or at least one step-up converter (18).

4. Circuit arrangement according to Claim 3, **characterized in that** the at least one inverter or the at least one step-up converter (18) is supplied with power from at least one battery (21).

5. Circuit arrangement according to Claim 1, **characterized in that** the main transformer (1) has an auxiliary operating winding which acts as the auxiliary winding (15).

6. Circuit arrangement according to Claim 3 or 5, **characterized in that** the at least one inverter or the at least one step-up converter (18) is formed from components of an auxiliary circuit.

## Revendications

1. Montage comportant un réseau auxiliaire (14), qui a une plus petite capacité en court-circuit qu'un réseau d'alimentation (13), et au moins un convertisseur d'entrée (9), qui est relié à au moins un enroulement secondaire (3 à 5) d'un transformateur principal (1) par l'intermédiaire d'interrupteurs de pontage (6 à 8) et en aval duquel au moins un circuit intermédiaire de tension (10) est branché, au moins un condensateur de circuit intermédiaire (11) étant placé dans le circuit intermédiaire de tension (10),
**caractérisé par le fait que**, pour charger le condensateur de circuit intermédiaire (11) avant le branchement d'au moins un enroulement primaire (2) du transformateur principal (1) sur le réseau d'alimentation (13), le réseau auxiliaire (14) est couplé de façon inductive au ou aux enroulements secondaires (3 à 5) par l'intermédiaire d'au moins un enroulement auxiliaire (15).

2. Montage selon la revendication 1,
**caractérisé par le fait que** le réseau auxiliaire (14) est formé par un autre réseau (16).

3. Montage selon la revendication 1,
**caractérisé par le fait que** le réseau auxiliaire (14) est formé par au moins un onduleur, de préférence un régleur à quatre quadrants (17), et/ou par au moins un régleur élévateur (18).

4. Montage selon la revendication 3,
**caractérisé par le fait que** le ou les onduleurs respectivement le ou les régleurs élévateurs (18) sont alimentés par au moins une batterie (21).

5. Montage selon la revendication 1,
**caractérisé par le fait que** le transformateur principal (1) comporte un enroulement de fonctionnement auxiliaire qui sert d'enroulement auxiliaire (15).

6. Montage selon la revendication 3 ou 5,
**caractérisé par le fait que** le ou les onduleurs respectivement le ou les régleurs élévateurs (18) sont formés d'éléments d'un circuit de fonctionnement auxiliaire.
